# EUROPÄISCHE PATENTSCHRIFT

(11) **EP 0 659 989 B1**
(45) Veröffentlichungstag und Bekanntmachung des Hinweises auf die Patenterteilung: **05.11.1997**
(21) Anmeldenummer: 94118070.5
(22) Anmeldetag: 16.11.1994
(51) Int. Cl.: F01P 3/08, F01M 1/08, F01M 9/10

(54) **Vorrichtung zur Zufuhr von Flüssigkeiten in einen Kolben**
Device for supplying liquids to a piston
Dispositif d'alimentation de liquides à un piston

(30) Priorität: 23.12.1993 DE 4344078
(43) Veröffentlichungstag der Anmeldung: 28.06.1995
(73) Patentinhaber: DAIMLER-BENZ AKTIENGESELLSCHAFT, 70567 Stuttgart (DE)
(72) Erfinder: Wolf, Harry, Dipl.-Ing., D-73066 Uhingen (DE)

(56) Entgegenhaltungen:
- EP-A- 0 347 580
- DE-A- 3 508 405
- DE-C- 624 528

## Beschreibung

Die Erfindung betrifft eine Hubkolbenbrennkraftmaschine mit einem Zylinderkopfgehäuse mit V-förmig angeordneten Zylinderreihen gemäß dem Oberbegriff des Patentanspruchs 1.

Eine gattungsgemäße Hubkolbenbrennkraftmaschine ist aus der DE 35 08 405 Al bekannt. Die Hubkolbenbrennkraftmaschine besitzt ebenfalls eine Einrichtung zur Kolbenkühlung, die für jeden Kolben ein Rohr aufweist, dessen eines Ende an einen Schmierölkanal angeschlossen ist und dessen anderes Ende eine Spritzöffnung aufweist. In seinem Verlauf bildet das Rohr eine weitere Spritzöffnung aus, die zusammen mit der anderen Spritzöffnung der Unterseite des Kolbens gegenübersteht. Diese Einrichtung ermöglicht somit nur eine Kühlung der Kolben.

Zum allgemeinen technischen Hintergrund wird noch auf die DE-A-31 25 835, DE-A-39 10 794 und DE-A-25 24 272 verwiesen.

Der Erfindung liegt die Aufgabe zugrunde, eine Hubkolbenbrennkraftmaschine zu schaffen, bei der die Einrichtung zur Kolbenkühlung auch gleichzeitig zur Schmierung von beweglichen Triebwerksteilen verwendet werden kann.

Die Aufgabe ist erfindungsgemäß durch die kennzeichnenden Merkmale des Anspruches 1 gelöst.
Durch die mindestens eine weitere Spritzöffnung wird die Vorrichtung nicht nur die Kolben kühlen, sondern gleichzeitig die für die Gaswechselsteuerung und/oder Kraftstofförderung vorgesehenen Triebwerksteile benetzen und schmieren.

Die mit der Erfindung erzielten Vorteile liegen deswegen insbesondere darin, daß durch ein einziges Rohr sowohl eine gezielte Kühlung des Kolbens als auch eine gezielte Schmierung spezieller Triebwerksteile erreicht wird. Ferner kann auf eine separate Schmierung dieser Triebwerksteile verzichten werden, was eine Vereinfachung der gesamten Maschine bzw. Brennkraftmaschine zur Folge hat. Darüber hinaus können die zur Lösung der Aufgabe notwendigen Maßnahmen besonders einfach und wirtschaftlich durchgeführt werden, in dem an einem üblichen Rohr für die Kühlung der Unterseite des Kolbens lediglich Spritzöffnungen vorgesehen werden, die ggf. durch Bohren erzeugt werden können.

Besonders vorteilhafte Ausgestaltungen der Erfindung sind den weiteren Ansprüchen zu entnehmen.

In der nachfolgenden Zeichnungsbeschreibung ist ein Ausführungsbeispiel einer erfindungsgemäßen Vorrichtung anhand der Zeichnung näher erläutert.

Es zeigt:
Fig. 1 die erfindungsgemäße Vorrichtung an einer schematisch im Querschnitt dargestellten Brennkraftmaschine;
Fig. 2 eine Fixierung für ein Spritzrohr der erfindungsgemäßen Vorrichtung am Zylindergehäuse in einem vergrößerten Querschnitt;
Fig. 3 die Fixierung aus Fig. 2 in einer Draufsicht.

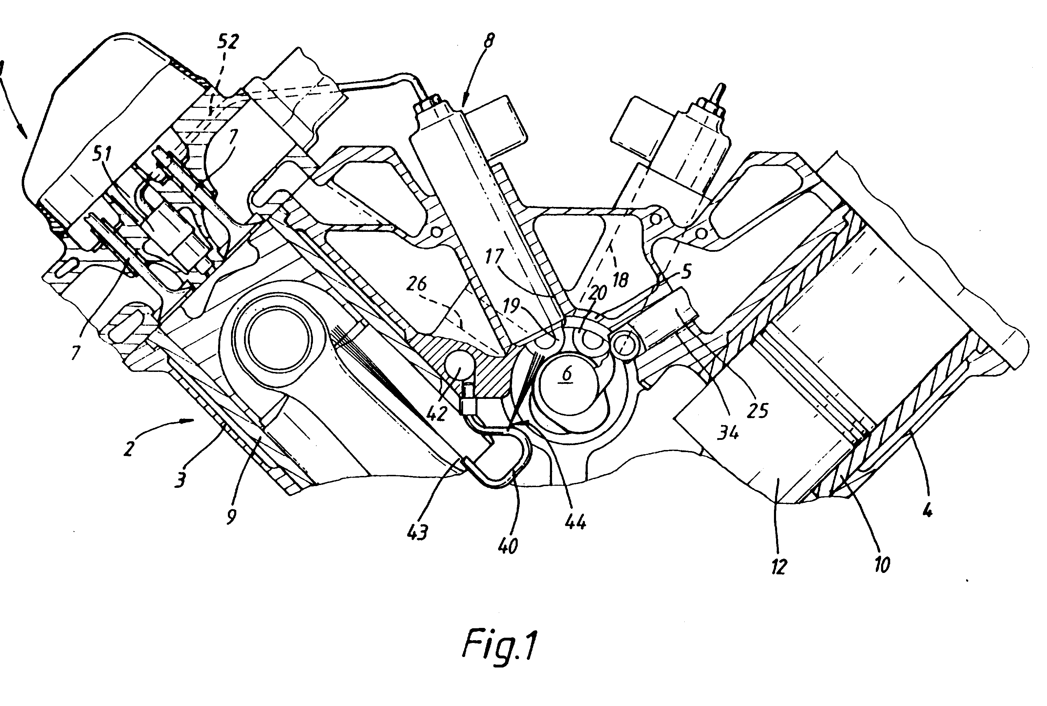

Gemäß Fig. 1 besitzt eine mehrzylindrige Brennkraftmaschine 1 mit einem Zylindergehäuse 2 mit V-förmig angeordneten Zylinderreihen 3, 4 im Bereich der zum Kurbelraum weisenden Spitze des V-Raumes im Zylindergehäuse 2 eine Nockenwellenaufnahme 5 für die Lagerung einer Nockenwelle 6, welche als gemeinsame Antriebswelle mit Nocken zur Betätigung aller Gaswechselventile 7 und Nocken zur Betätigung aller Einspritzpumpenelemente 8 beider Zylinderreihen 3, 4 bestimmt ist. Im Rahmen der Erfindung ist es denkbar, daß die Nockenwelle 6 nur Nocken zur Betätigung der Gaswechselventile 7 oder nur Nocken zur Betätigung der Einspritzpumpenelemente 8 besitzt.

An den innenliegenden Längsseiten beider Zylinderreihen 3, 4 sind den Zylindern 9, 10 zugeordnete Aufnahmebohrungen 17, 18 für die Einspritzpumpen 8 angeformt. Jede der sogenannten Steckpumpen 8 der Einspritzvorrichtung ist von der Nockenwelle über einen in der Aufnahmebohrung 17 bzw. 18 geführten Rollenstößel 19 bzw. 20 gegen die Kraft einer nicht dargestellten Druckfeder 15 angetrieben. Von der Steckpumpe 8 führt eine Einspritzleitung 52 zu der entsprechenden Einspritzdüse 51.

Zwischen den Zylindern und Aufnahmebohrungen verlaufen Stößelstangen 25 in Ventilstößelführungen 26 bzw. 34. Die Gaswechselventile 7 werden durch die Nockenwelle 6 über diese Stößelstangen 25 angetrieben.

Die Vorrichtung zur Zufuhr von Schmieröl zu jedem einzelnen Kolben 11 bzw. 12 der Brennkraftmaschine 1 besteht aus einem Rohr 40 bzw. 41 (aus Klarheitsgründen stellt Fig. 1 nur das Rohr 40 zur Kühlung eines Kolbens in einem Zylinder der linken Zylinderreihe dar). Das Rohr 40 ist an einem seiner Enden am Zylindergehäuse 2 befestigt und steht in Strömungsverbindung mit einem im Zylindergehäuse 2 geformten Schmierölkanal 42. Von dem am Zylindergehäuse 2 befestigten Ende her verläuft das Rohr 40 durch einen oder mehrere Bögen vorzugsweise bis in die kurbelraumseitige Zylinderöffnung einer Zylinderbuchse hinein, so daß das freie Ende des Rohres 40 der Unterseite des Kolbens 11 gegenübersteht. An diesem freien Ende des Rohres 40 befindet sich eine Spritzöffnung 43 für die Kühlung der Unterseite des Kolbens 11. Das Schmieröl durchströmt die Vorrichtung und wird nach Austritt aus der Spritzöffnung 43 im freien Strahl gegen die Unterseite des Kolbens 11 gespritzt.

Erfindungsgemäß ist im Verlauf des Rohres 40 bzw. 41 mindestens eine weitere Spritzöffnung 44 vorgesehen. Wie aus der Abbildung ersichtlich, wird durch diese Spritzöffnung 44 Schmieröl an die Rollenstößel 19 bzw. an die Berührungsflächen von Nockenwelle 5 und Rollenstößeln 19 der Einspritzvorrichtung gebracht. Die Rollenstößel 19 der Einspritzvorrichtung werden dadurch benetzt und geschmiert.

Die weitere Spritzöffnung 44 kann so breit ausgelegt sein, daß sie nicht nur die Rollenstößel benetzt sondern auch gleichzeitig die Stößel 25 der Gaswechselsteuerung bzw. die Berührungsflächen zwischen den Stößeln 25 und der Nockenwelle 5. Dazu kann die Spritzöffnung spaltförmig ausgebildet sein.

Es wäre auch denkbar, daß der Schmierölstrahl aus der weiteren Spritzöffnung 44 nur gegen die Stößeln 25 gerichtet ist.

Es können auch zwei oder mehr Spritzöffnungen 44 im Verlauf des Rohres vorgesehen sein, wobei die eine Spritzöffnung für die Schmierung der für die Gaswechselsteuerung vorgesehenen Triebwerksteile und die zweite Spritzöffnung für die Schmierung der für die Kraftstofförderung vorgesehenen Triebwerksteile dient.

Die mindestens eine weitere Spritzöffnung 44 kann an dem gefertigten Rohr 40 gesondert durch Bohren oder gleichzeitig bei der Herstellung des Rohres mit erzeugt werden. Vorzugsweise verläuft die weitere Spritzöffnung 44 quer zur Längsachse des Rohres 40.

Sowohl an die für die Kühlung der Unterseite des Kolbens vorgesehene Spritzöffnung 43 als auch an die mindestens eine im Verlauf des Rohres vorgesehene weitere Spritzöffnung 44 kann eine Düse angesteckt bzw. befestigt werden.
Alternativ dazu können auch das Rohr und die Düse bzw. Düsen einheitlich aus einem Rohrstück gefertigt sein.

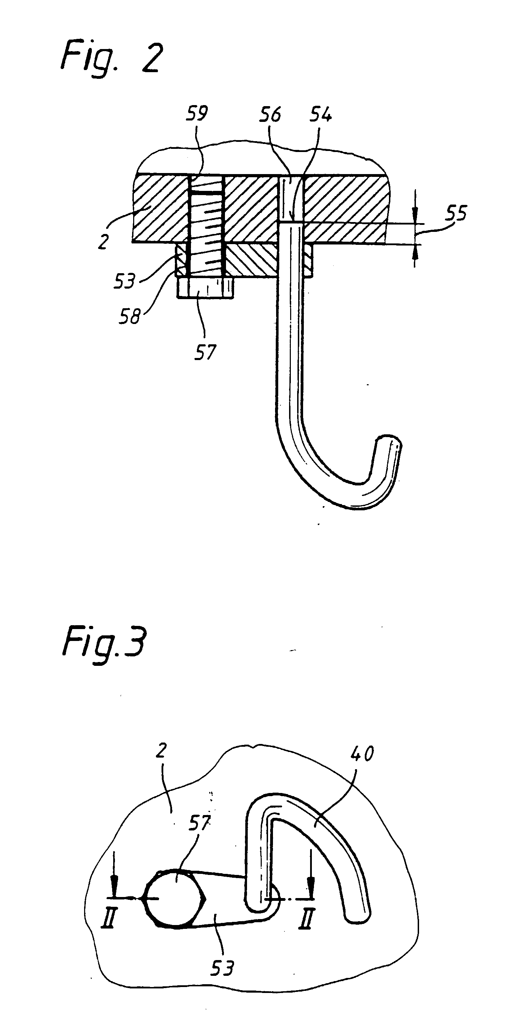

Die einzelnen Rohre 40 müssen mit ihren Spritzöffnungen 43 und 44 immer exakt zu den anzuspritzenden Bauelementen ausgerichtet sein. Dabei muß die Ausrichtung auf einfache Weise und mit einfachen Mitteln erfolgen können.
Gemäß den Fig. 2 und 3 wird dies durch ein am Rohr 40 befestigtes Fixierblech 53 erreicht. Das Rohr 40 durchsetzt dabei das Blech 53 soweit, daß sein zylindergehäuseseitiges Ende 55 mit einer Rastlänge 55 vorsteht. Das Rohr 40 taucht mit der Rastlänge 55 in eine vom Schmierölkanal 42 abgezweigte Anschlußbohrung 56 als erste Lagesicherung ein. Mittels einer Schraube 57, welche durch eine Bohrung 58 im Fixierblech 53 gesteckt und in einer Gewindebohrung 59 des Zylindergehäuses 2 eingeschraubt ist, erfolgt sodann die entgültige Fixierung am Zylindergehäuse 2.
Damit bei der Montage die Ausrichtung der Spritzöffnungen 43 und 44 automatisch erfolgt, sind die Bohrungen 56 und 59 im Zylindergehäuse 2 und das Rohr 40 gegenüber dem Fixierblech 53 in einer vorbestimmten Lage zueinander angeordnet.

## Patentansprüche

1. Hubkolbenbrennkraftmaschine (1) mit einem Zylinderkopfgehäuse (2) mit V-förmig angeordneten Zylinderreihen (3,4), mit einer im Bereich der Spitze des V-Raumes angeordneten Nockenwelle (6) zur Steuerung von zumindest der Gaswechselventile (7), mit der Kraftstofförderung (8) dienenden Triebwerksteilen (19,20,25) und mit einer Einrichtung zur Kolbenkühlung, welche für jeden Kolben (11,12) ein Rohr (40) aufweist, dessen eines Ende an einen im Zylinderkopfgehäuse angeordneten Schmierölkanal (42) angeschlossen ist und dessen anderes Ende eine Spritzöffnung (43) aufweist, die der Unterseite des Kolbens gegenübersteht, wobei das Rohr in seinem Verlauf eine weitere Spritzöffnung (44) aufweist,
**dadurch gekennzeichnet,**
**daß** mindestens die weitere Spritzöffnung (44) zur Schmierung von der Gaswechselsteuerung (7) und/oder der Kraftstofförderung (8) dienenden Triebwerksteilen (19, 20, 25) vorgesehen ist.

2. Hubkolbenbrennkraftmaschine gemäß Anspruch 1,
**dadurch gekennzeichnet,**
**daß** eine einzige für die Schmierung bestimmte Spritzöffnung (44) vorgesehen ist, von der aus sowohl die für die Gaswechselsteuerung als auch die für die Kraftstofförderung vorgesehenen Triebwerksteile benetzt werden.

3. Hubkolbenbrennkraftmaschine gemäß einem der Ansprüche 1 oder 2,
**dadurch gekennzeichnet,**
**daß** zwei für die Schmierung bestimmte Spritzöffnungen (44) vorgesehen sind, von denen die eine für die Schmierung der für die Gaswechselsteuerung vorgesehenen Triebwerksteile (25) und die andere für die Schmierung der für die Kraftstofförderung vorgesehenen Triebwerksteile (19,20) dient.

4. Hubkolbenbrennkraftmaschine gemäß einem oder mehreren der vorhergehenden Ansprüche,
**dadurch gekennzeichnet,**
**daß** die mindestens eine weitere Spritzöffnung (44) durch Bohren des gefertigten Rohres (40) erzeugt ist.

5. Hubkolbenbrennkraftmaschine gemäß einem oder mehreren der vorhergehenden Ansprüche 1 bis 3,
**dadurch gekennzeichnet,**
**daß** die mindestens eine weitere Spritzöffnung (44) gleich bei der Herstellung des Rohres (40) erzeugt wird.

6. Hubkolbenbrennkraftmaschine gemäß einem oder mehreren der vorhergehenden Ansprüche,
**dadurch gekennzeichnet,**
**daß** eine Düse an die für die Kühlung des Kolbens vorgesehene Spritzöffnung (43) und/oder an die, mindestens eine für die Schmierung vorgesehene Spritzöffnung (44) angesteckt bzw. befestigt ist.

7. Hubkolbenbrennkraftmaschine gemäß einem oder mehreren der vorhergehenden Ansprüche,
**dadurch gekennzeichnet,**
**daß** die für die Kühlung des Kolbens vorgesehene Spritzöffnung (43) und/oder die mindestens eine für die Schmierung vorgesehene Spritzöffnung (44) als Düse ausgebildet ist, die einstückig mit dem Rohr (40) gefertigt ist.

8. Hubkolbenbrennkraftmaschine nach einem oder mehreren der vorhergehenden Ansprüchen,
**dadurch gekennzeichnet,**
**daß** das Rohr (40) im Bereich seines zylindergehäuseseitigen Endes (54) an einem gegenüber der Rohrlängsrichtung quer angeordneten Fixierblech (53) befestigt ist, wobei für eine erste Fixierung das Rohr (40) mit einer Rastlänge (55) aus dem Fixierblech (53) vorsteht und mit diesem Überstand in eine von dem Zuführkanal (42) abgezweigte Anschlußbohrung (56) eingesetzt ist und daß zur weiteren Lagefixierung die Schraubverbindung zur Befestigung des Rohres (40) am Zylindergehäuse (2) mit Schraube (57) und Gewindebohrung (59) im Zylindergehäuse (2) dient.

## Claims

1. Reciprocating piston internal combustion engine (1) with a cylinder head housing (2) having cylinder banks (3, 4) arranged in a V-shape, with a camshaft (6) situated in the area of the apex of the V-space for the control at least of the gas exchange valves (7), with engine components (19, 20, 25) that serve the fuel delivery system (8), and with a piston cooling device which comprises a tube (40) for each piston (11, 12), one end of the said tube being connected to a lubrication oil channel (42) in the cylinder head housing while the other end comprises an injection aperture (43) opposite the underside of the piston, and such that along its length the tube has a further injection aperture (44),
**characterized in that**
at least one further injection aperture (44) is provided for the lubrication of the gas exchange control system (7) and/or the engine components (19, 20, 25) that serve the fuel delivery system (8).

2. Reciprocating piston internal combustion engine according to Claim 1,
**characterized in that**
a single injection aperture (44) intended for lubrication is provided, from which both the engine components for the gas exchange control system and those for the fuel delivery system are irrigated.

3. Reciprocating piston internal combustion engine according to either of Claims 1 or 2,
**characterized in that**
two injection apertures (44) intended for lubrication are provided, one of them serving to lubricate the engine components (25) provided for the gas exchange control system and the other to lubricate the engine components (19, 20) provided for the fuel delivery system.

4. Reciprocating piston internal combustion engine according to any one or more of the preceding Claims,
**characterized in that**
at least one further injection aperture (44) is produced by drilling of the manufactured tube (40).

5. Reciprocating piston internal combustion engine according to any one or more of the preceding Claims 1 to 3,
**characterized in that**
the at least one further injection aperture (44) is also produced during the manufacture of the tube (40).

6. Reciprocating piston internal combustion engine according to any one or more of the preceding Claims,
**characterized in that**
a nozzle is plugged or fitted into the injection aperture (43) provided for the cooling of the piston, and/or to the at least one injection aperture (44) provided for lubrication.

7. Reciprocating piston internal combustion engine according to any one or more of the preceding Claims,
**characterized in that**
the injection aperture (43) provided for cooling the piston and/or the at least one injection aperture (44) provided for lubrication, is/are formed as a nozzle manufactured integrally with the tube (40).

8. Reciprocating piston internal combustion engine according to any one or more of the preceding Claims,
**characterized in that**
in the area if its end near the cylinder head housing (54), the tube (40) is attached to a fixing plate (53) positioned transversely to the direction of the tube's length, such that for a first fixing, the tube projects through the fixing plate (53) by a detent length (55), and this excess length is inserted into a connection hole (56) branching off from the inlet channel (42), and that to further fix its position, a screw connection is used to attach the tube (40) to the cylinder housing (2) by means of a screw-bolt (57) and a threaded hole (59) in the cylinder housing (2).

## Revendications

1. Moteur (1) à combustion interne à pistons à mouvement alternatif comprenant :
- un corps (2) de culasse de cylindre avec des rangées de cylindres (3, 4) disposés en V,
- un arbre à cames (6) disposé dans la zone en pointe de l'espace en V servant à commander au moins les soupapes (7) de distribution des gaz
- des pièces de moteur (19, 20, 25) servant à l'alimentation (8) en carburant, et
- un dispositif de refroidissement des pistons qui comprend, pour chaque piston (11, 12), un tube (40) dont une extrémité est raccordée à une conduite (42) d'huile de lubrification disposée dans le corps de la culasse du cylindre et dont l'autre extrémité comprend un orifice (43) de pulvérisation qui est placé en face de la partie formant le dessous du piston, grâce à quoi le tube, sur sa longueur, comprend un autre orifice (44) de pulvérisation,
caractérisé en ce que
au moins l'autre orifice (44) de pulvérisation est prévu pour la lubrification des pièces de moteur (19, 20, 25) servant à la commande (7) de distribution des gaz et/ou servant à l'alimentation (8) en carburant.

2. Moteur à combustion interne à pistons à mouvement alternatif selon la revendication 1, caractérisé en ce qu'un seul orifice (44) de pulvérisation sert à la lubrification, orifice à partir duquel les pièces du moteur, prévues aussi bien pour la commande de distribution des gaz que pour l'alimentation en carburant, peuvent être mouillées.

3. Moteur à combustion interne à pistons à mouvement alternatif selon la revendication 1 ou 2, caractérisé en ce que deux orifices (44) de pulvérisation sont prévus pour la lubrification, un orifice servant à la lubrification des pièces (25) du moteur prévues pour la commande de distribution des gaz, l'autre orifice servant à la lubrification des pièces du moteur (19, 20) prévues pour l'alimentation en carburant.

4. Moteur à combustion interne à pistons à mouvement alternatif selon l'une quelconque ou plusieurs des revendications précédentes, caractérisé en ce que au moins l'autre orifice (44) de pulvérisation est obtenu par perçage du tube (40) fabriqué.

5. Moteur à combustion interne à pistons à mouvement alternatif selon l'une quelconque ou plusieurs des revendications 1 à 3, caractérisé en ce que au moins l'autre orifice (44) de pulvérisation est réalisé dès la fabrication du tube (40).

6. Moteur à combustion interne à pistons à mouvement alternatif selon l'une quelconque ou plusieurs des revendications précédentes, caractérisé en ce qu'une buse est rajoutée ou fixée au niveau de l'orifice (43) de pulvérisation prévu pour le refroidissement du piston et/ou au moins au niveau de l'orifice (44) de pulvérisation prévu pour la lubrification.

7. Moteur à combustion interne à pistons à mouvement alternatif selon l'une quelconque ou plusieurs des revendications précédentes, caractérisé en ce que l'orifice (43) de pulvérisation prévu pour le refroidissement du piston et/ou au moins l'orifice (44) de pulvérisation prévu pour la lubrification est configuré comme une buse qui est fabriquée en formant une seule pièce avec le tube (40).

8. Moteur à combustion interne à pistons à mouvement alternatif selon l'une quelconque ou plusieurs des revendications précédentes, caractérisé en ce que le tube (40) est fixé dans la zone de son extrémité (54), côté corps du cylindre, sur une tôle de fixation (53) disposée transversalement par rapport à la direction longitudinale du tube, grâce à quoi, pour une première fixation, le tube (40) dépasse de la tôle de fixation (53) avec une longueur d'arrêt (55) et qui, avec cette longueur faisant saillie, est introduit dans un trou d'assemblage (56) obtenu par piquage par rapport à la conduite (42) d'alimentation, et en ce que, pour l'autre fixation en position, l'assemblage à vis sert à fixer le tube (40) sur le corps (2) du cylindre avec la vis (57) et avec le perçage fileté (59) dans le corps (2) du cylindre.
